# EUROPÄISCHE PATENTSCHRIFT

(11) **EP 0 756 816 B1**
(45) Veröffentlichungstag und Bekanntmachung des Hinweises auf die Patenterteilung: **09.01.2002**
(21) Anmeldenummer: 96111762.9
(22) Anmeldetag: 22.07.1996
(51) Int. Cl.: A01F 15/00, B30B 9/30

(54) **Presse mit einem Schneckengehäuse und einer Ballenbildungskammer**
Press with anger feeding means and bale chamber
Presse comportant une vis sans fin et une chambre de formage des balles

(30) Priorität: 03.08.1995 US 510983
(43) Veröffentlichungstag der Anmeldung: 05.02.1997
(73) Patentinhaber: DEERE & COMPANY, Moline, Illinois 61265-8098 (US)
(72) Erfinder: Sibley, Dwight Arnold, Nashua, Montana 59248 (US); Dolbert, Dale Ray, Hedrick, Iowa 52563 (US)
(74) Vertreter: Magin, Ludwig Bernhard

(56) Entgegenhaltungen:
- US-A- 2 080 316
- US-A- 4 256 035
- US-A- 5 377 481

## Beschreibung

Die Erfindung betrifft eine Presse mit einem Schneckengehäuse und einer Ballenbildungskammer, wobei sich in dem Schneckengehäuse eine drehbare Verdichtungsschnecke erstreckt, die an einem Einlaß angenommenes Erntegut der Ballenbildungskammer zufördert und in deren Aufnahmebereich endet.

Die US-A-5,377,481 offenbart eine Presse mit einem Schneckengehäuse und einer stromabwärts auf dieses folgenden Ballenbildungskammer. In dem Schneckengehäuse erstreckt sich eine Schnecke, die zu verdichtendes Material, nämlich Erntegut, auf einer Seite annimmt und es auf dem Weg zu der Ballenbildungskammer verdichtet. Der Verdichtungsvorgang wird durch radial verlaufende Verdichtungsrollen am Ende der Verdichtungsschnecke unterstützt, die über das sich bereits in der Ballenbildungskammer befindliche Erntegut bewegt werden. Das Schneckengehäuse ist im Querschnitt rund, während die Ballenbildungskammer einen viereckigen Querschnitt besitzt.

Das der Erfindung zugrunde liegende Problem wird darin gesehen, daß das Material nicht ausreichend gleichmäßig über den Querschnitt der Ballenbildungskammer verteilt wird.

Dieses Problem wird erfindungsgemäß durch die Lehre des Patentanspruchs 1 bzw. 2 gelöst, wobei in den weiteren Patentansprüchen die Lösung in vorteilhafter Weise weiterentwickelnde Merkmale aufgeführt sind.

Auf diese Weise wird mittels der **Eckzufuhrvorrichtungen** das Ernte- oder Preßgut abgezweigt und den Eckbereichen der Ballenbildungskammer zugeführt. Die beiden Wände ergeben eine Art Förderrinne, die aufgrund ihrer Ausbildung unter einem spitzen Winkel, ihres Scheitelpunktes, der den Materialstrom teilt, und der divergierenden Wände für eine zuverlässige Beförderung sorgen.

Wenn eine der Wände der **Eckzufuhrvorrichtung** bereits mit einer Wand des Übergangsbereichs oder der Ballenbildungskammer zusammenfällt, erfolgt ein störungsfreies Gleiten des Preß- oder Ernteguts entlang dieser Wand, was zur Zuverlässigkeit der Presse beiträgt.

Eine Ecke zwischen beiden Wänden bietet einen höheren Reibwiderstand als ein gekrümmter Übergangsbereich, so daß mit diesem Merkmal die Zuführung zu dem Eckbereich der Ballenbildungskammer noch mehr gewährleistet wird.

Eine sehr erfolgreiche Winkelgröße für den Winkel zwischen beiden Wänden ist 30 Grad.

Wenn sich die erste Wand über die halbe Höhe der Ballenbildungskammer erstreckt, bietet jede **Eckzufuhrvorrichtung** die größtmögliche Gleitfläche, wenn man einen viereckigen Kanalquerschnitt der Ballenbildungskammer unterstellt.

Aus dem Übergangsbereich heraus und sich in die Ballenbildungskammer hinein erstreckende Endbereiche der zweiten Wand und/oder eines evtl. vorhandenen Abstreifblechs verhindern, daß das in die Ballenbildungskammer abgegebene Preßgut von der rotierenden Verdichtungsschnecke in Drehung versetzt wird.

Eine Neigung der Ecke zu dem Boden der Ballenbildungskammer von 45 Grad führt auf kurzem Weg zu einer Überbrückung der unterschiedlichen Querschnitte in dem Schneckengehäuse und der Ballenbildungskammer.

Der rechtwinklige Verlauf einer Seite der zweiten Wand zu den vorbeistreifenden Wendeln der Verdichtungsschnecke stellt sicher, daß das Preßgut einwandfrei von den Wendeln abgenommen wird.

Mit der Hilfe eines an die Seite der zweiten Wand angebrachten Abstreifblechs kann eine aggressive Abstreifkante für das Preßgut erzeugt werden.

Das Abstreifblech kann auch zusätzlich als Stützlager für die auskragende Verdichtungsschnecke verwendet werden, wenn deren der Verdichtungsschnecke zugelegene Oberfläche entsprechend gekrümmt ist.

Die Dichte des Ballens wird wesentlich erhöht, wenn das Ende der Verdichtungsschnecke mit sich um radial verlaufende Wellen drehenden Verdichtungsrollen versehen ist.

In der Zeichnung ist ein nachfolgend näher beschriebenes Ausführungsbeispiel der Erfindung dargestellt. Es zeigt:
- Fig. 1: eine erfindungsgemäße Presse in Seitenansicht,
- Fig. 2: einen rückwärtigen Bereich eines Schneckengehäuses und einen vorderen Bereich einer Ballenbildungskammer der Presse aus Figur 1 in einem vertikalen Längsschnitt,
- Fig. 3: eine Vorderansicht des Schneckengehäuses in perspektivischer Darstellung,
- Fig. 4: einen Ausschnitt des Schneckengehäuses in perspektivischer Darstellung und
- Fig. 5: eine Vorderansicht der Ballenbildungskammer mit sich darin befindlichem Preßgut, wobei Abdrücke von Verdichtungsrollen und einer Welle dargestellt sind.

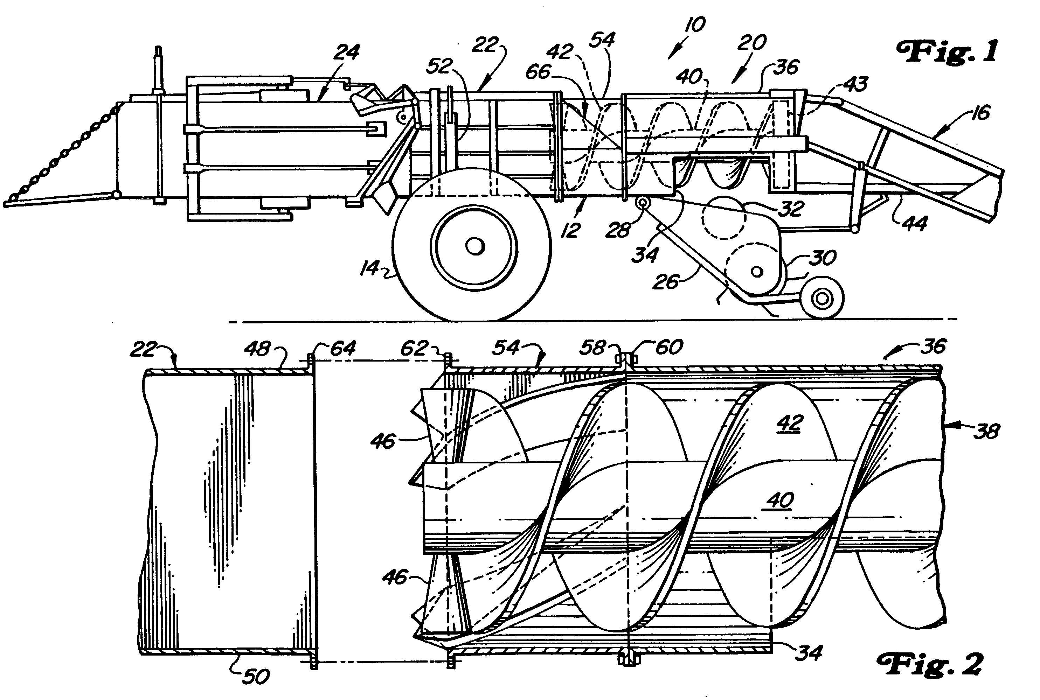

In Figur 1 ist eine Presse 10 des Typs dargestellt, der dazu verwendet wird, um quaderförmige Ballen aus Erntematerial zu bilden und der einen Hauptrahmen 12 enthält, der auf einem Paar von Rädern 14 ruht, die ihn auf dem Boden abstützen, und an dessen Frontbereich eine Deichsel 16 angeschlossen ist, die zum Anschluß an einen nicht gezeigten Ackerschlepper ausgebildet ist. Der Hauptrahmen 12 ist aus strukturellen Komponenten von funktionellen Elementen der Presse 10 zusammengesetzt, wobei die funktionellen Elemente von vorn nach hinten betrachtet ein Schneckengehäuse 20, eine Ballenbildungskammer 22 und eine Ballenbindungskammer 24 enthalten.

Eine Erntegutaufnahmevorrichtung 26 erstreckt sich unterhalb des Schneckengehäuses 20 und ist bei der Lagerstelle 28 an strukturelle Komponenten unterhalb einer unteren rückwärtigen Stelle des Schneckengehäuses 20 schwenkbar angeschlossen. Die Erntegutaufnahmevorrichtung 26 weist in Querrichtung voneinander getrennte Seitenwände auf, die gegenüberliegende Enden eines mit Zinken versehenen Rechens 30 und einer mittigen Zufuhrschnecke 32 tragen, wobei die letztere im Betrieb Erntegut zu einem Einlaß 34 leitet, der von einem Ausschnitt an dem unteren vorderen Bereich eines zylindrischen rohrförmigen Körpers 36 gebildet wird, der einen vorderen Bereich des Schneckengehäuses 20 bildet. Entlang einer Längsachse des Schneckengehäuses 20 erstreckt sich eine Verdichtungsschnecke 38 mit einer zentralen, rohrförmigen zylindrischen Welle 40, die doppelschneckenförmige Wendel 42 trägt, um Erntegut von der Erntegutaufnahmevorrichtung 26 anzunehmen und es nach hinten zu der Ballenbildungskammer 22 zu fördern. Ein vorderer Endbereich der Welle 40 ist in einem Getriebegehäuse 43, das an dem Hauptrahmen 12 befestigt ist, sowohl drehbar gelagert als auch von diesem getragen. Eine Antriebswelle 44 ist zwischen einer nicht gezeigten Zapfwelle des Ackerschleppers und einer Eingangswelle eines in dem Getriebegehäuse 43 befindlichen Getriebes eingefügt, wobei das Getriebe ein Zahnrad aufweist, das an dem vorderen Endbereich der Welle 40 befestigt ist.

Im weiteren wird auf das in den Figuren 2 bis 4 Gezeigte Bezug genommen. Dort ist ersichtlich, daß sich die Welle 40 der Verdichtungsschnecke 38 um eine kurze Strecke nach hinten über die Wendel 42 und das Schneckengehäuse 20 hinaus erstreckt und daß an diametral gegenüberliegenden Stellen des rückwärtigen Endes der Welle 40 ein Paar Verdichtungsrollen 46 angeordnet sind, die sich radial erstrecken und um eine radial verlaufende Achse drehbar sind. Eine Decke 48 bzw. ein Boden 50 der Ballenbildungskammer 22 enthalten nicht gezeigte Platten, die in ihrem vorderen Bereich für eine vertikale Schwenkbewegung um horizontale Querwellengelenke schwenkbar gelagert sind, wobei zum Betrieb an die Platten der Decke 48 bzw. des Bodens 50 ein Paar Hydraulikzylinder 52 angeschlossen sind. Die Hydraulikzylinder 52 haben die Aufgabe, den Abstand zwischen den rückwärtigen Enden der Platten zu verändern, um dadurch den Widerstand in der Erntegutbewegung durch die Ballenbildungskammer 22 zu variieren und somit die Dichte des in der Ballenbildungskammer 22 gebildeten Ballens zu verändern.

Bis zu dieser Stelle trifft die Beschreibung auch auf eine aus der US-A-5,377,481 bekannte Presse zu, in der weitere Details erläutert sind, auf die bei Bedarf zurückgegriffen werden kann.

Ein rückwärtiger Bereich des Schneckengehäuses 20 wird von einem Übergangsbereich 54 gebildet, der vorzugsweise von einem zylindrischen Rohr 56 mit einem Flansch 58 gebildet wird, der an einen Flansch 60 an dem rückwärtigen Ende des vorderen Körpers 36 des Schneckengehäuses 20 angeschlossen wird. Ein rückwärtiges oder stromabwärts gelegenes Ende des Übergangsbereichs 54 endet in einer vertikalen und querverlaufenden Ebene, die sich am rückwärtigen Ende der Wendel 42 befindet, und ist mit einem Flansch 62 versehen, der lösbar an einen ähnlichen oder gleichen Flansch 64 anschließbar ist, der an dem vorderen oder stromaufwärts gelegenen Ende der Ballenbildungskammer 22 vorgesehen ist.

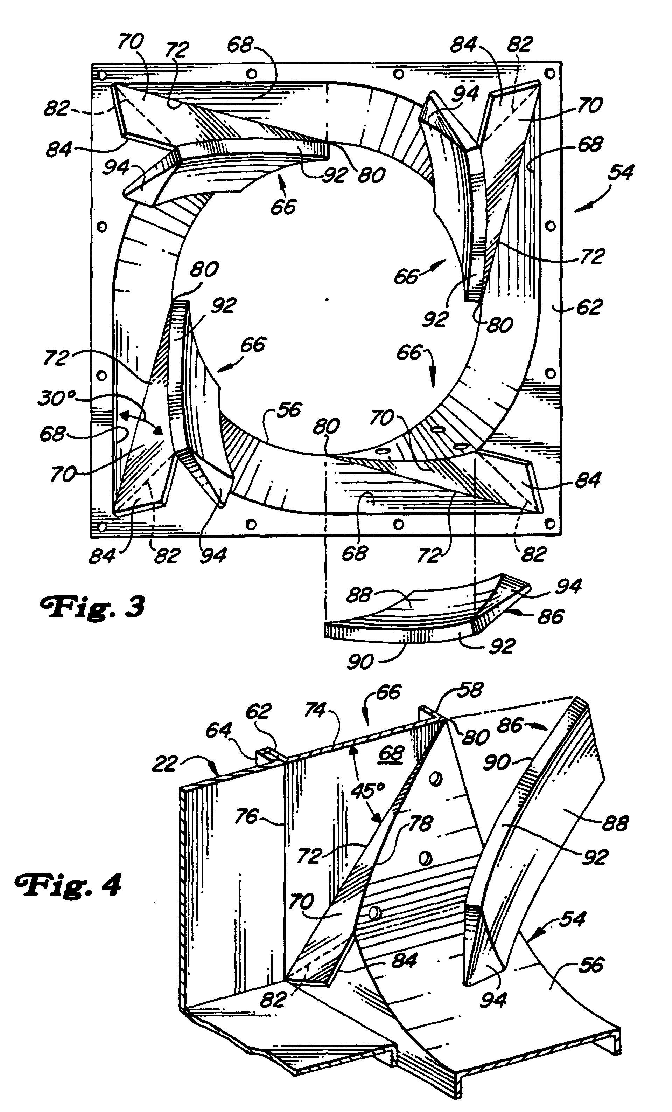

Wie am besten aus Figur 3 hervorgeht, sind vier identische **Eckzufuhrvorrichtungen** 66 in gleichmäßig voneinander entfernten oberen rechten, oberen linken, unteren linken und unteren rechten Abschnitten des Übergangsbereichs 54 eingesetzt. Jede **Eckzufuhrvorrichtung** 66 enthält eine erste und zweite Wand 68 bzw. 70, die unter einem spitzen Winkel von ungefähr 30 Grad zusammengefügt sind, um eine Ecke 72 oder Kante zu bilden. Mit Bezug auf Figur 4 wird erkenntlich, daß jede erste Wand 68 in co-planarer Beziehung zu einer betreffenden Seitenwand der Ballenbildungskammer 22 steht und die Form eines rechtwinkligen Dreiecks einnimmt, dessen Hypotenuse von der Ecke 72 gebildet wird, dessen erster, horizontaler Schenkel 74 sich parallel zu der Drehachse der Verdichtungsschnecke 38 erstreckt und dessen zweiter Schenkel 76 in co-planarer Beziehung zu einer betreffenden Seitenwand der Ballenbildungskammer 22 steht. Jede zweite Wand 70 hat eine Seite 78, die einem spiralförmigen Pfad folgt und an das zylindrische Rohr 56 anschließt. Die Ecke 72, der erste Schenkel 74, und die Seite 78 der zweiten Wand 70 laufen ausgehend von einem Scheitelpunkt 80 im vorderen Endbereich des Übergangsbereichs 54 auseinander. Wenn man von hinten auf die vier **Eckzufuhrvorrichtung** 66 schaut, befinden sich die vier Scheitelpunkte 80 in der 12.00, 3.00, 6.00 und 9.00 Uhr Position bei einer Drehung um die Längsachse des Schneckengehäuses 20 und die betreffenden Ecken 72 der **Eckzufuhrvorrichtung** 66 führen von den Scheitelpunkten 80 zu betreffenden Ecken der Ballenbildungskammer 22. Es wird auch darauf hingewiesen, daß jede zweite Wand 70 den Übergangsbereich 54 entlang einer Linie 82 durchtrennt, die sich mit Bezug auf die Zentrumsachse des Übergangsbereichs 54 radial erstreckt, und einen dreieckigen, rückwärtigen Bereich 84 aufweist, der sich rückwärtig bis über die Linie 82 erstreckt, so daß er sich innerhalb des stromaufwärts gelegenen Endbereichs der Ballenbildungskammer 22 erstreckt. Die dreieckigen rückwärtigen Bereiche 84 dienen dazu, jeder Drehbewegung des zu pressenden Materials in der Ballenbildungskammer 22 entgegenzuwirken.

Jedem der **Eckzufuhrvorrichtungen** 66 ist ein Abstreifblech 86 zugeordnet, das in weiten Teilen die Form eines Rohrabschnitts einnimmt, der innere bzw. äußere Oberflächen 88, 90 besitzt, wobei die äußere Oberfläche 90 unter einer Krümmung geformt ist, die der des Rohrs 56 gleichkommt, und wobei die innere Oberfläche 88 unter einer Krümmung bzw. einem Radius gebildet ist, die nur geringfügig größer ist als der Radius der Wendel 42. Mit Bezug auf die im Gegenuhrzeigerdrehsinn verlaufende Drehung der Verdichtungsschnecke 38 sind die Abstreifbleche 86 an den betreffenden nachlaufenden Seiten der **Eckzufuhrvorrichtungen** 66 auf das Rohr 56 montiert, wobei jedes Abstreifblech 86 eine voreilende Kante 92 aufweist, die so geformt ist, daß sie der Seite 78 der zweiten Wand 70 der **Eckzufuhrvorrichtung** 66 folgt. Rückwärtige Enden 94 der Abstreifbleche 86 erstrecken sich jeweils nach hinten über die **Eckzufuhrvorrichtung** 66. Es wird an dieser Stelle bemerkt, daß die Seiten 78 der zweiten Wände 70 der **Eckzufuhrvorrichtungen** 66 und infolgedessen die voreilenden Kanten 92 der Abstreifbleche 86 in der Nähe jeweils an den Abstreifblechen 86 vorbeistreichender Flächen ungefähr unter einem rechten Winkel zu den Wendeln 42 ausgerichtet sind. Erntegut, das von den Wendeln 42 und den Verdichtungsrollen 46 abgestreift wurde, tritt daher in die **Eckzufuhrvorrichtungen** 66 ein und wird somit in die vier Eckbereiche der Ballenbildungskammer 22 geleitet. Zusätzlich befinden sich die Abstreifbleche 86 in unmittelbarer Nachbarschaft zu den Wendeln 42 und wirken mit diesen dahingehend, daß sie den rückwärtigen Bereich der Verdichtungsschnecke 38 abstützen.

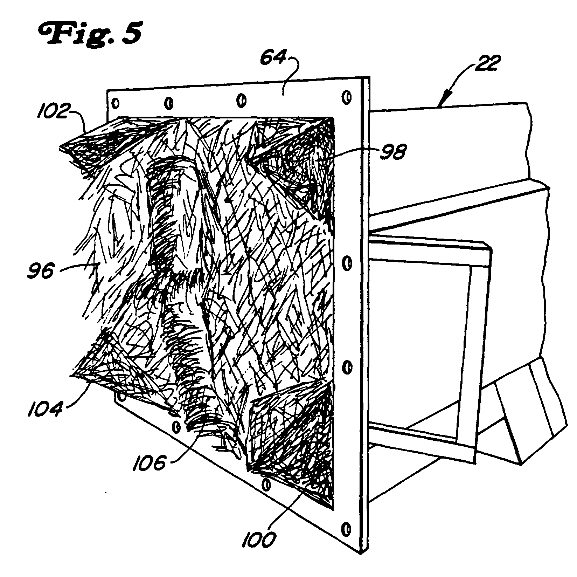

Es wird nun Bezug auf Figur 5 genommen, in der das rückwärtige Ende eines Ballens 96 gezeigt ist, der in der Ballenbildungskammer 22 hergestellt worden ist. Im einzelnen ist zu erkennen, daß das Erntegut gleichmäßig zu oberen und unteren in Fahrtrichtung linken Eckbereichen 98 und 100 bzw. oberen und unteren rechten Eckbereichen 102 und 104 verteilt ist, um so rechtwinklige Ecken zu bilden, wie dies gewünscht ist. Über die Stirnseite des Ballens 96 verläuft auch ein Abdruck 106 der von dem rückwärtigen Ende der Welle 40 und den Verdichtungsrollen 46 hinterlassen wurde.

Es wird daher erkenntlich, daß die Verdichtungsschnecke 38, die **Eckzufuhrvorrichtungen** 66 und die Abstreifbleche 86 zusammenwirken, um Ballen 96 zu erzeugen, die rechtwinklige Ecken und eine durchgehend gleichmäßige Erntegutverteilung aufweisen.

## Patentansprüche

1. Presse mit einem Schneckengehäuse (20) und einer Ballenbildungskammer (22), wobei sich in dem Schneckengehäuse (20) eine drehbare Verdichtungsschnecke (38) erstreckt, die an einem Einlaß (34) angenommenes Erntegut der Ballenbildungskammer (22) zufördert und in deren Aufnahmebereich endet, **gekennzeichnet durch** einen Übergangsbereich (54) am Ende des im Querschnitt runden Schneckengehäuses (20) und stromaufwärts der im Querschnitt eckigen Ballenbildungskammer (22), wobei der Übergangsbereich (54) zu den Ecken der Ballenbildungskammer (22) führende **Eckzufuhrvorrichtungen** (66) aufweist, die jeweils aus einer ersten und einer zweiten Wand (68) und (70) bestehen, die von einem Scheitelpunkt (80) im Bereich des Schneckengehäuses (20) divergierend und unter einem spitzen Winkel zwischen ihnen zu Eckbereichen der Ballenbildungskammer (22) verlaufen.

2. Presse mit einem Schneckengehäuse (20) und einer Ballenbildungskammer (22), wobei sich in dem Schneckengehäuse (20) eine drehbare Verdichtungsschnecke (38) erstreckt, die an einem Einlaß (34) angenommenes Erntegut der Ballenbildungskammer (22) zufördert und in deren Aufnahmebereich endet, **gekennzeichnet durch** einen Übergangsbereich (54) am Ende des im Querschnitt runden Schneckengehäuses (20) und stromaufwärts der im Querschnitt eckigen Ballenbildungskammer (22), wobei der Übergangs-bereich (54) den Ecken der Ballenbildungskammer (22) zugeordnete Bogenabschnitte aufweist, an die sich tangential jeweils eine im wesentlichen ebene Fläche anschließt, die jeweils mit einer Wand des Übergangsbereichs (54) bzw. der Ballenbildungskammer (22) zusammenfällt und jeweils mit dem zugeordneten Bogenabschnitt eine erste Wand (68) einer **Eckzufuhrvorrichtung** (66) bildet, deren zweite Wand (70) unter einem spitzen Winkel zu der ersten Wand (68) verläuft, wobei die erste und die zweite Wand (68) und (70) ausgehend von einem Scheitelpunkt (80) an dem Schneckengehäuse (20) bis zu der betreffenden Ecke in der Ballenbildungskammer (22) breiter werden.

3. Presse nach Anspruch 1 oder 2, **dadurch gekennzeichnet, daß** die erste und die zweite Wand (68) und (70) zwischen sich eine Ecke (72) bilden, die zwischen dem Scheitelpunkt (80) und der Ecke in der Ballenbildungskammer (22) verläuft.

4. Presse nach einem oder mehreren der vorherigen Ansprüche, **dadurch gekennzeichnet, daß** der Winkel zwischen der ersten und der zweiten Wand (68) und (70) im wesentlichen 30 Grad beträgt.

5. Presse nach einem oder mehreren der vorherigen Ansprüche, **dadurch gekennzeichnet, daß** die erste Wand (68) stromabwärts halb so hoch ist wie die nachfolgende Wand der Ballenbildungskammer (22).

6. Presse nach einem oder mehreren der vorherigen Ansprüche, **dadurch gekennzeichnet, daß** der Winkel zwischen der Ecke (72) im Verbindungsbereich beider Wände (68, 70) und dem Boden der Ballenbildungskammer (22) ca. 45 Grad beträgt.

7. Presse nach einem oder mehreren der vorherigen Ansprüche, **dadurch gekennzeichnet, daß** eine Seite (78) der zweiten Wand (70) im wesentlichen auf einer Schraubenlinie verläuft, die unter einem rechten Winkel zu angrenzenden Wendeln (42) der Verdichtungsschnecke (38) steht.

8. Presse nach einem oder mehreren der vorherigen Ansprüche, **gekennzeichnet durch** in dem Übergangsbereich (54) befestigte und den **Eckzufuhrvorrichtungen** (66) zugeordnete Abstreifbleche (86) mit einer Kante (92) zum Abstreifen des geförderten Guts.

9. Presse nach Anspruch 8, **dadurch gekennzeichnet, daß** das Abstreifblech (86) eine innere Oberfläche (88) aufweist, deren Krümmung dem Radius der Wendel (42) folgt und die bis nahe an die Wendel (42) heranreicht.

10. Presse nach einem oder mehreren der vorherigen Ansprüche, **dadurch gekennzeichnet, daß** ein Abstreifblech (86) im eingebauten Zustand und/oder eine zweite Wand (70) über den Übergangsbereich (54) hinaus bis in die Ballenbildungskammer (22) ragt.

11. Presse nach einem oder mehreren der vorherigen Ansprüche, **dadurch gekennzeichnet, daß** das Ende der Verdichtungsschnecke (38) mit sich um radial verlaufende Wellen drehenden Verdichtungsrollen (46) versehen ist.

## Claims

1. A baler with an auger housing (20) and a bale-forming chamber (22), wherein a rotatable compacting auger (38) extends in the auger housing (20) and feeds crop received at an inlet (34) to the bale-forming chamber (22) and ends in the receiving region thereof, **characterized by** a transition region (54) at the end of the auger housing (20) of round cross-section and upstream of the bale-forming chamber (22) which is cornered in cross-section, wherein the transition region (54) has comer feed devices (66) leading to the corners of the bale-forming chamber (22), each consisting of a first wall (68) and a second wall (70), which run divergently from an apex point (80) in the region of the auger housing (20) and with an acute angle between them to corner regions of the bale-forming chamber (22).

2. A baler with an auger housing (20) and a bale-forming chamber (22), wherein a rotatable compacting auger (38) extends in the auger housing (20) and feeds crop received at an inlet (34) to the bale-forming chamber (22) and ends in the receiving region thereof, **characterized by** a transition region (54) at the end of the auger housing (20) of round cross-section and upstream of the bale-forming chamber (22) which is cornered in cross-section, wherein the transition region (54) has arcuate sections which are associated with the corners of the bale-forming chamber (22) respectively and at each of which a substantially flat surface adjoins tangentially, which in each case coincides with a wall of the transition region (54) and of the bale-forming chamber (22) and in each case forms with the associated arcuate section a corner feed device (66) whose second wall (70) extends at an acute angle to the first wall (68), wherein the first and second walls (68 and 70) become wider from an apex (80) on the auger housing (20) up to the corresponding comer in the bale-forming chamber (22).

3. A baler according to claim 1 or 2, **characterized in that** the first and second walls (68 and 70) form a corner (72) between them which runs between the apex (80) and the corner of the bale-forming chamber (22).

4. A baler according to one or more of the preceding claims, **characterized in that** the angle between the first and second walls (68 and 70) amounts to substantially 30 degrees.

5. A baler according to one or more of the preceding claims, **characterized in that** the first wall (68) is downstream half the height of the following wall of the bale-forming chamber (22).

6. A baler according to one or more of the preceding claims, **characterized in that** the angle between the comer (72) in the region of connection of the two walls (68, 70) and the bottom of the bale-forming chamber (22) amounts to about 45 degrees.

7. A baler according to one or more of the preceding claims, **characterized in that** one side (78) of the second wall (70) substantially follows a helical line which is at right angles to the adjoining flights (42) of the compacting auger (38).

8. A baler according to one or more of the preceding claims, **characterized by** stripper plates (86) fixed in the transition region (54) and associated with the corner feed devices (66), with an edge (92) for stripping off conveyed material.

9. A baler according to claim 8, **characterized in that** the stripper plate (86) has an inner surface (88) whose curvature follows the radius of the auger (42) and which extends close up to the auger (42).

10. A baler according to one or more of the preceding claims, **characterized in that** a stripper plate (86) as installed and/or a second wall (70) projects beyond the transition region (54) into the bale-forming chamber (22).

11. A baler according to one or more of the preceding claims, **characterized in that** the end of the compacting auger (38) is provided with compacting rollers (46) which turn about radially extending shafts.

## Revendications

1. Presse comportant un carter (20) de vis sans fin et une chambre (22) de formation de la balle, une vis sans fin rotative de compactage (38) s'étendant dans le carter (20) de la vis sans fin, qui amène de la matière à récolter, et arrive au niveau d'une entrée (34), à la chambre (22) de formation de la balle et se termine dans la zone de réception de la chambre, **caractérisée par** une zone de jonction (54) à l'extrémité du carter (20) dé la vis sans fin, qui possède une section transversale circulaire, et en amont de la chambre (22) de formation de la balle, qui possède une section transversale polygonale, la zone de jonction (54) possédant des dispositifs d'amenée en coin (66), qui aboutissent aux coins de la chambre (22) de formation de la balle et qui sont constitués chacun par une première paroi (68) et une seconde paroi (70), qui s'étendent en divergeant depuis un sommet (80) dans la zone du carter (20) de la vis sans fin et font un angle aigu entre eux en direction des zones de coin de la chambre (22) de formation de la balle.

2. Presse comportant un carter (20) de vis sans fin et une chambre (22) de formation de la balle, une vis sans fin rotative de compactage (38) s'étendant dans le carter (20) de la vis sans fin, qui amène la matière à récolter et arrive au niveau d'une entrée (34), à la chambre (22) de formation de la balle et se termine dans la zone de réception de la chambre, **caractérisée par** une zone de jonction (54) à l'extrémité du carter (20) de la vis sans fin, qui possède une section transversale circulaire, et en amont de la chambre (22) de formation de la balle, qui possède une section transversale polygonale, la zone de jonction (54) possédant, des sections coudées associées aux coins de la chambre (22) de formation de la balle et auxquelles se raccordent tangentiellement respectivement une surface sensiblement plate, qui coïncide respectivement par une paroi de la zone de jonction (54) ou de la chambre (22) de formation de la balle et forme respectivement, avec la section coudée associée, une première paroi (68) d'un dispositif d'amenée en coin (66), dont la seconde paroi (70) fait un angle aigu par rapport à la paroi (68), la largeur de la première paroi (68) et de la seconde paroi (70) augmentant à partir d'un sommet (80) sur le carter (20) de la vis sans fin, jusqu'au coin concerné dans la chambre (22) de formation de la balle.

3. Presse selon la revendication 1 ou 2, **caractérisée en ce que** la première paroi (68) et la seconde paroi (70) forment entre elles un coin (72), qui s'étend entre le sommet (80) et le coin dans la chambre (22) de formation de la balle.

4. Presse selon une ou des plusieurs des revendications précédentes, **caractérisée en ce que** l'angle entre la première paroi (68) et la seconde paroi (70) est égal sensiblement à 30 degrés.

5. Presse selon une ou plusieurs des revendications précédentes, **caractérisée en ce que** la première paroi (68) possède, en amont, la moitié de la hauteur de la paroi suivante de la chambre (22) de formation de la balle.

6. Presse selon une ou plusieurs des revendications précédentes, **caractérisée en ce que** l'angle entre le coin (72) dans la zone de liaison des deux parois (68, 70) et le fond de la chambre (22) de formation de la balle est égal à environ 45 degrés.

7. Presse selon une ou plusieurs des revendications précédentes, **caractérisée en ce qu'**un côté (78) de la seconde paroi (70) s'étend essentiellement suivant une ligne hélicoïdale, qui fait un angle droit par rapport aux filets contigus (42) de la vis sans fin de compactage (38).

8. Presse selon une ou plusieurs des revendications précédentes, **caractérisée par** des tôles de raclage, qui sont fixées dans la zone de jonction (54) et sont associés aux dispositifs d'amenée en coin (66) et comportant une arête (92) servant à racler la matière entraînée.

9. Presse selon la revendication 8, **caractérisée en ce que** la tôle formant racle (86) possède une surface intérieure (88), dont la courbure suit l'arrondi de l'hélice (42) et qui s'étend jusqu'à proximité de l'hélice (42).

10. Presse selon une ou plusieurs des revendications précédentes, **caractérisée en ce qu'**une tôle de raclage (86) à l'état monté et/ou une seconde paroi (70) fait saillie, au-delà de la zone de jonction (54), dans la chambre (22) de formation de la balle.

11. Presse selon une ou plusieurs des revendications précédentes, **caractérisée en ce que** l'extrémité de la vis sans fin de compactage (38) comporte des rouleaux de compactage (46) qui tournent autour d'arbres radiaux.
